# EUROPÄISCHE PATENTSCHRIFT

(11) **EP 0 534 182 B1**
(45) Veröffentlichungstag und Bekanntmachung des Hinweises auf die Patenterteilung: **01.03.1995**
(21) Anmeldenummer: 92115033.0
(22) Anmeldetag: 03.09.1992
(51) Int. Cl.: B65G 47/90, B62D 65/00

(54) **Greifvorrichtung für gepolsterte Sitze, insbesondere Kraftfahrzeugsitze**
Gripper for upholstered seats, in particular car seats
Dispositif de préhension pour sièges rembourrés, en particulier sièges d'automobile

(30) Priorität: 25.09.1991 DE 4131900
(43) Veröffentlichungstag der Anmeldung: 31.03.1993
(73) Patentinhaber: Adam Opel Aktiengesellschaft, 65428 Rüsselsheim (DE); General Motors Espana, S.A., Figueruelas (Zaragoza) (ES)
(72) Erfinder: Müller, Hans-Dieter, Ing.-grad., W-6096 Raunheim (DE); Thomas, Karl Heinz, W-6501 Wörrstadt (DE); Ast, Hubert, Dipl.-Ing., W-6085 Nauheim (DE); Magee, Conor, B. E. C., Eng., W-6200 Wiesbaden (DE)
(74) Vertreter: Bergerin, Ralf, Dipl.-Ing.

(56) Entgegenhaltungen:
- PATENT ABSTRACTS OF JAPAN vol. 13, no. 512 (M-893)16. November 1989
- PATENT ABSTRACTS OF JAPAN vol. 8, no. 90 (M-292)(1527) 25. April 1984

## Beschreibung

Die Erfindung betrifft eine Greifvorrichtung für gepolsterte sitze, insbesondere Kraftfahrzeugsitze (siehe z.B. JP-A-59 006 180).

Beim Transport und insbesondere bei der weiteren Verarbeitung, z. B. beim Einbau in Kraftfahrzeugkarosserien, müssen Sitze bisher manuell gehoben und bewegt werden, da die Polsterung einer mechanischen Manipulierung im Wege stand. Besondere Probleme bereitet eine mechanische Handhabung dann, wenn der gepolsterte Sitz lediglich an seinen gepolsterten Teilen gehalten werden kann und so lagegenau in eine Montageposition gebracht werden soll. Dieses Problem ergibt sich beim Einbau von Sitzen in Fahrzeugkarosserien mittels Manipulatoren oder Robotern.

Aufgabe der Erfindung ist es somit, eine Greifvorrichtung zu schaffen, mit welcher ein gepolsterter Sitz von der Polsterseite her positionsgenau greifbar und haltbar ist und somit von einem mechanischen Arbeitsgerät, wie z. B. einem Roboter, auch exakt an einem Montageort abgesetzt werden kann.

Erfindungsgemäß wird diese Aufgabe dadurch gelöst, daß ein an Sitzfläche und Lehnenfläche des gepolsterten Sitzes aufliegendes Formteil mit leichtem Druck an den Sitz angepreßt ist, zwischen die hintere Sitzflächenbegrenzung und die untere Lehnenbegrenzung eine am Formteil um eine Achse nahe der Berührungslinie zwischen Sitzfläche und Lehnenfläche schwenkbar und in der Ebene der Sitzfläche verschiebbar gelagerte Haltezunge führbar ist und die Haltezunge aus der zur Sitzfläche parallelen Ebene in eine in Richtung zur Lehnenfläche hin geneigte Ebene unter Krafteinwirkung schwenkbar ist.

Das Verschieben und Verschwenken der Haltezunge gegenüber dem Formteil erfolgt vorteilhafterweise durch mechanische Hilfseinrichtungen.

Die Hilfseinrichtungen können sowohl von Hand betätigte Einrichtungen als auch pneumatische, hydraulische oder elektrisch betriebene Einrichtungen sein.

Mit einer solchen erfindungsgemäßen Greifvorrichtung gelingt es, einen gepolsterten Sitz von der Polsterseite her sicher und positionsgenau zu halten. Damit wird es möglich, mittels eines Roboters, dem diese Greifvorrichtung zugeordnet ist, gepolsterte Sitze von einer Palette, einem Vormontageplatz oder dergleichen abzunehmen und positionsgenau in das Innere einer Fahrzeugkarosserie einzusetzen. Die Befestigungspunkte des Sitzes an seiner Unterlage bleiben frei zugänglich, so daß mit der Greifvorrichtung eine automatisierte oder teilautomatisierte Montage der Sitze an ihrer Unterlage möglich wird. Das gelingt dank der nur von der Polsterseite her greifenden Einrichtung auch bei den sehr beengten Platzverhältnissen, wie sie an den Vordersitzen von Kraftfahrzeugen gegeben sind.

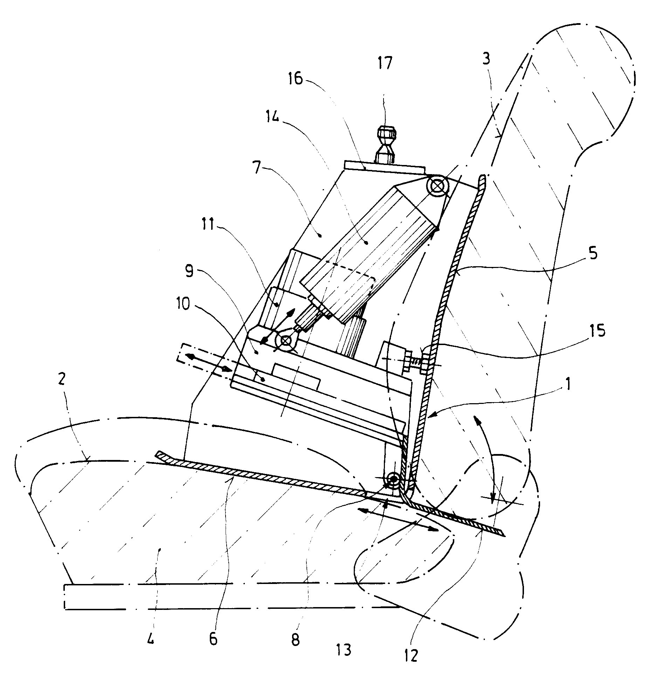

Ein Ausführungsbeispiel der Erfindung ist nachstehend anhand einer Zeichnung näher beschrieben. Die Figur zeigt eine Greifvorrichtung teilweise im Schnitt auf einem Fahrzeugsitz.

Ein winkelförmiges Formteil 1 liegt sowohl an der Sitzfläche 2 als auch an der Lehnenfläche 3 des Fahrzeugsitzes 4 auf. Die winkelförmig zueinander angeordneten Auflageflächen 5 und 6 des Formteils 1 sind durch Seitenteile 7 formstabil gehalten. Zwischen den Seitenteilen 7 ist nahe der Berührungslinie zwischen der Auflagefläche 5 an der Lehnenfläche 3 und der Auflagefläche 6 an der Sitzfläche 2 eine Achse 8 vorgesehen, um welche eine Schieberführung 9 schwenkbar gelagert ist. In der Schieberführung 9 ist in Sitzlängsrichtung ein Schieber 10 geführt, der durch einen Motor 11 in der Schieberführung 9 verschoben werden kann. Der Schieber 10 trägt an seiner der Lehnenfläche 3 zugewandten Seite eine Haltezunge 12, die in einer Ausgangsstellung parallel zur Auflagefläche 6 des Formteils 1 zwischen den Auflageflächen 5 und 6 liegt. An der Berührungslinie zwischen den Auflageflächen 5 und 6 ist ein Durchbruch 13 eingearbeitet, durch welchen die Haltezunge 12 bei Verschieben des Schiebers 10 in Richtung zur Lehnenfläche 3 hin hindurchtreten kann. Ein sich an den Seitenteilen 7 abstützender Fluidzylinder 14 greift an die Schieberführung 9 derart an, daß bei Aktivieren des Fluidzylinders 14 die Schieberführung 9 um die Achse 8 geschwenkt wird. Dabei wird die eine Endlage der Schwenkbewegung, bei der sich die Haltezunge 12 nahezu parallel zur Auflagefläche 6 befindet, durch einen einstellbaren Anschlag 15 begrenzt. Im oberen Bereich der Seitenteile 7 ist eine Anschlußplatte 16 befestigt, welche einen Adapter 17 für ein Montagegerät, z. B. für einen Roboter, aufweist. Der Adapter 17 kann aber ebenso an den Seitenteilen 7 angeordnet sein.

Die Greifvorrichtung ist mittels des Adapters 17 mit einem Montagegerät, z. B. einem Roboter, verbunden. Dieser legt die Greifvorrichtung auf den zu transportierenden Fahrzeugsitz 4 mit leichtem Druck auf, und zwar derart, daß die Anlagefläche 6 auf der Sitzfläche 2 und die Anlagefläche 5 auf der Lehnenfläche 3 anliegen. Durch eine geeignete mit der Steuerung des Roboters zusammenarbeitende Steuerung wird jetzt der Motor 11 angesteuert, welcher den Schieber 10 mit der Haltezunge 12 derart verschiebt, daß die Haltezunge 12 durch den Durchbruch 13 hindurch zwischen das Sitzteil und das Lehnenteil des Fahrzeugsitzes 4 gleitet. Danach wird der Fluidzylinder 14 aktiviert, welcher mit einer definierten Kraft die Schieberführung 9 zusammen mit dem Schieber 10 und der Haltezunge 12 um die Achse 8 schwenkt. Die Bewegungsrichtung des Schiebers 10 sowie die Schwenkrichtung der Haltezunge 12 sind durch Pfeile angedeutet. Dabei übt die Haltezunge 12 zunehmenden Druck auf die untere Kante der Lehne des Fahrzeugsitzes 4 aus. Als Reaktion dazu werden die Auflagefläche 5 und 6 des Formteiles 1 an die Sitzfläche 2 und die Lehnenfläche 3 gedrückt. Der Fahrzeugsitz 4 ist somit schonend und trotzdem sehr lagegenau gehalten. Er kann so von einem Montagegerät wie z. B. einem Roboter sehr genau positioniert werden, z. B. indem er direkt an die Montageposition im Fahrzeug abgesetzt wird. Damit ist es möglich, die schwere körperliche Arbeit des Sitzeinbaues in Kraftfahrzeugen weitgehend zu mechanisieren.

## Patentansprüche

1. Greifvorrichtung für gepolsterte Sitze, insbesondere Kraftfahrzeugsitze, dadurch gekennzeichnet, daß ein an Sitzfläche (2) und Lehnenfläche (3) aufliegendes Formteil (1) mit leichtem Druck an den Sitz angepreßt ist, zwischen die hintere Sitzflächenbegrenzung und die untere Lehnenbegrenzung eine am Formteil (1) um eine Achse (8) nahe der Berührungslinie zwischen Sitzfläche (2) und Lehnenfläche (3) schwenkbar und in der Ebene der Sitzfläche (2) verschiebbar gelagerte Haltezunge (12) führbar ist und die Haltezunge (12) aus der zur Sitzfläche (2) parallelen Ebene in eine in Richtung zur Lehnenfläche (3) hin geneigte Ebene unter Krafteinwirkung schwenkbar ist.

2. Greifvorrichtung nach Anspruch 1, dadurch gekennzeichnet, daß für das Verschieben und Verschwenken der Haltezunge (12) mechanische Hilfseinrichtungen vorgesehen sind.

3. Greifvorrichtung nach Anspruch 1 und 2, dadurch gekennzeichnet, daß die mechanischen Hilfseinrichtungen von Hand betätigte Einrichtungen sind.

4. Greifvorrichtung nach Anspruch 1 und 2, dadurch gekennzeichnet, daß die mechanischen Hilfseinrichtungen pneumatisch, hydraulisch oder elektrisch betriebene Einrichtungen (11; 14) sind.

## Claims

1. Gripper device for upholstered seats, especially motor vehicle seats, **characterised** in that a form part (1), resting against a seat surface (2) and backrest surface (3), is pressed with slight pressure against the seat, between the limit of the rear seat surface and the lower backrest limit can be guided a pivotal retaining tongue (12) which is pivotable about a shaft (8) near the contact line between seat surface (2) and backrest surface (3) and can is displaceably arranged in the plane of the seat surface (2), and the retaining tongue (12) can be pivoted under the effect of a force from the plane parallel to the seat surface (2) into a plane inclined in the direction towards the backrest (3).

2. Gripper device according to claim 1, **characterised** in that mechanical aids are provided for displacing and pivoting the retaining tongue (12).

3. Gripper device according to claim 1 and 2, **characterised** in that the mechanical aids are manually operated devices.

4. Gripper device according to claim 1 and 2, **characterised** in that the mechanical aids are pneumatically, hydraulically or electrically operated devices (11; 14).

## Revendications

1. Dispositif de préhension pour des sièges rembourrés, en particulier pour des siège de véhicules automobiles, caractérisé par le fait qu'un élément préformé (1) qui prend appui sur l'assise (2) et sur le dossier (3) est appliqué avec une faible pression sur le siège, qu'une plaque de support (12) qui est montée sur l'élément préformé (1) avec possibilité de rotation autour d'un axe (8) proche de la ligne de jonction entre l'assise (2) et le dossier (3) et avec possibilité de déplacement en translation dans le plan de l'assise (2) est engagée entre l'extrémité arrière de l'assise et l'extrémité inférieure du dossier et que la plaque de support (12) peut pivoter sous l'action de forces depuis le plan parallèle à l'assise (2) dans un plan qui est incliné dans la direction du dossier (3).

2. Dispositif de préhension selon la revendication 1, caractérisé par le fait que des dispositifs auxiliaires mécaniques sont prévus aux fins de déplacer en translation et de faire pivoter la plaque de support (12).

3. Dispositif de préhension selon les revendications 1 et 2, caractérisé par le fait que les dispositifs auxiliaires mécaniques sont des dispositifs actionnés manuellement.

4. Dispositif de préhension selon les revendications 1 et 2, caractérisé par le fait que les dispositifs auxiliaires mécaniques sont des dispositifs actionnés par voie pneumatique, par voie hydraulique ou par voie électrique.
